# EUROPEAN PATENT SPECIFICATION

(11) **EP 0 960 792 B1**
(45) Date of publication and mention of the grant of the patent: **04.06.2003**
(21) Application number: 98120473.8
(22) Date of filing: 29.10.1998
(51) Int. Cl.: B60T 7/10, G05G 1/04

(54) **Safety device for a parking hand brake with a plastic lever**
Sicherheitsvorrichtung für eine Handfeststellbremse mit einem Plastikhebel
Dispositif de sécurité pour frein de stationnement à main avec levier plastique

(30) Priority: 29.05.1998 IT TO980100 U
(43) Date of publication of application: 01.12.1999
(73) Proprietor: S.I.V. S.p.A., 10040 Volvera (Torino) (IT)
(72) Inventor: La Rosa, Giacomo, 90144 Palermo (PA) (IT); Cavaglia', Renato, 10040 Volvera (TO) (IT)
(74) Representative: Di Francesco, Gianni

(56) References cited:
- EP-A- 0 499 494
- EP-A- 0 788 954
- GB-A- 2 250 556

## Description

The present invention relates to a safety device for a parking hand brake for a motor vehicle, equipped with a plastic lever.

Plastic levers for parking hand brakes for motor vehicles are already known. Their resistance to stress is achieved by way of reinforcement ribbing. The advantages of these levers, as compared with the conventional metal ones, consist in that they are light, silent and cost less.

The most important disadvantage of this kind of levers relates to the fact that, in case of fire, it is not possible to guarantee that the parking brake will be kept braked, due of the loss of the function of the lever and the following loss of the fixing point for the transmission cable to the brake mechanism arranged on the wheels.

EP 0 788 954 discloses a parking brake pedal arrangement where the operating lever is isolated from the cable load path, according to the preamble of independent claim 1.

It is the object of the present invention to avoid such inconvenience.

Said object is achieved by means of a safety device for a parking hand brake as claimed in the first claim.

Additional advantages and characteristics will become evident from the following description made with reference to the attached drawings which illustrate the invention by way of non-limiting example and in which:

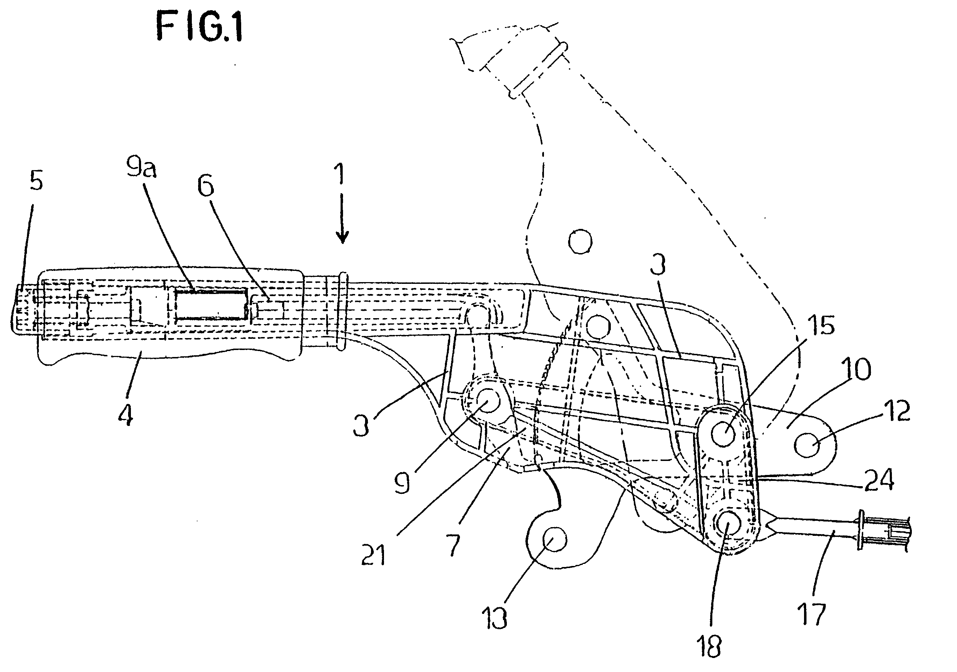

- Figure 1 is a view of the components of the brake assembled before being mounted on the motor vehicle;
- Figure 2 is a plan view of one of the components of the brake in Figure 1, and
- Figure 3 is a plan view of a second component of the brake in Figure 1.

With reference to the figures, reference number 1 indicates a parking hand brake with a plastic lever presenting several reinforcement ribs 3. Said lever is equipped with a grip 4 (which could also be integral part of the lever) and of a button 5, which by a transmission rod 6, moves a pawl 7 in the shape of an equaliser resting on a fulcrum on a pivot 9. The button 5 and the transmission rod 6 may be made also as a single piece.

The position of the pawl 7 is controlled by means of a spring 9a which, by working on the transmission rod 6, push it against a toothed sector 10. The toothed sector 10 is fixed on the tunnel of the motor vehicle (not shown) at the points 12 and 13 by conventional means, e.g. bolts (not shown). The lever 1 is resting on a fulcrum on the upper part of the toothed sector 10, by means of a pivot 15. The lever and the pivot can rotate freely on the sector in order to reach the higher position indicated by section lining, that is the working position, in which it acts on the transmission rod 17. This rod is connected to the lever itself, on the end opposite to the end of the grip 4, by means of a pivot 18. When the lever is in the working position the transmission rod is pulled in the direction indicated by arrow F and transmits the movement of the lever 1 to the actuating mechanism of the parking brake which blocks the wheel of the motor vehicle.

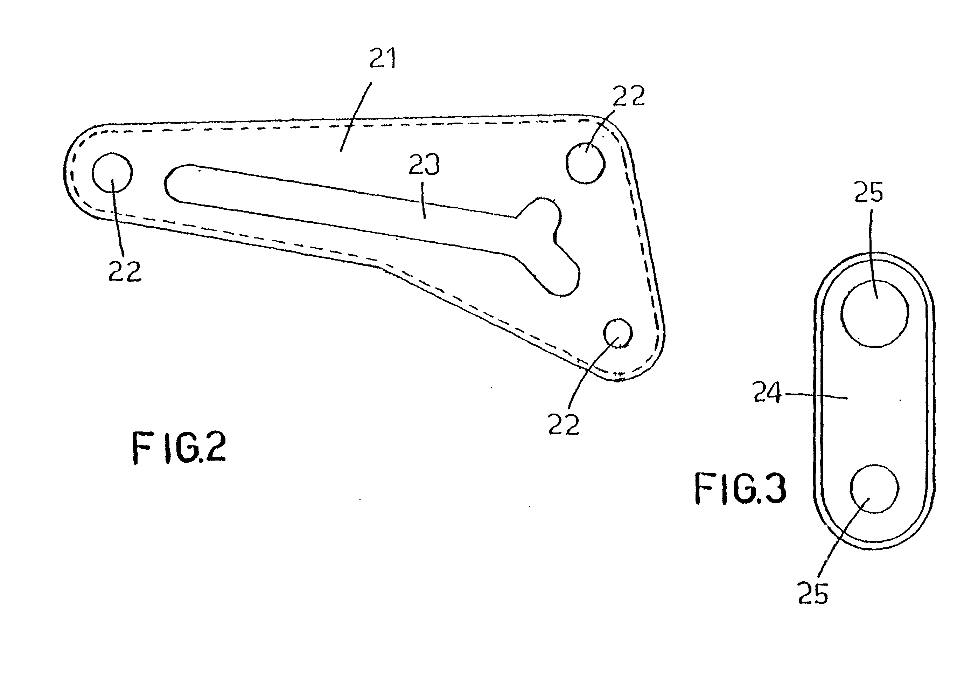

According to the invention, in order to prevent the brake from being released, in case the function of the lever 1 is lost, because of fire or of any other reasons, so that the motor vehicle could move without control, the pivot 9 serving as fulcrum for the pawn 7, the pivot 15 which is fulcrum to the lever 1 and the pivot 18 to which rod 17 is connected, are connected by means of a metal plate 21 basically triangular in shape (figure 2) equipped with holes 22 for the passage of said pivots. Moreover, said plate is equipped with a reinforcement indentation 23. However, the shape of the plate is not binding and could be modified without departing from the scope of the invention.

In order to make the complex more solid, a metal platelet 24 (figure 3), equipped with passage holes, is located, between the pivots 15 and 18, on the other face of the lever 1 with respect to the one were the metal plate 21 is. All the pivots employed are closed by means of riveting, but different methods can be employed and even the shape of the platelet 24 could be specular to the shape of the plate 21, without departing from the scope of the present invention.

Furthermore the materials used to make the plate 21 and the platelet 24, could be different from metal (e.g. kevlar) yet presenting equivalent functional characteristics in case of variations in the temperature.

The teeth of the toothed sector 10 and the pawl 7, will be profiled so that they will become disengaged only as a consequence of the action of the transmission rod 6.

Thus even if the lever 1 is totally melted and the rod 6 falls, the coupling of the pawl 7 and the toothed sector 10 remains stable and the traction on the transmission cable 17 is kept.

## Claims

1. Safety device for a parking brake of a motor vehicle, said brake being equipped with:
- one plastic lever (1), resting on a fulcrum on a toothed sector (10) and movable between a position of rest and a working position:
- means to control the position of the lever in relationship to said toothed sector, consisting of one pawl (7) in the shape of an equaliser, resting on a fulcrum on said lever (1);
- one pivot (18) for connection to said lever for a rod (17) transmitting its movement to the braking device of the motor vehicle;
- means for the connection of the toothed sector to the flatcar of the motor vehicle;
**characterised in that** it comprises one metal plate (21) in which are inserted, in adequate holes: the pivot (15) to make the lever (1) rest on a fulcrum on the toothed sector (10); the pivot (9) to make the pawl (7) rest on a fulcrum on the lever (1), and the pivot to connect the rod (17) to said lever (1).

2. Device as claimed in claim 1 **characterised in that** the pivot (15) to make the lever (1) rest on a fulcrum on the toothed sector (10) and the pivot (18) to connect the rod (17) to said lever (1) are inserted into holes made into a single metal platelet (24).

3. Device as claimed in claim 1 **characterised in that** the pivot (15) to make the lever (1) rest on a fulcrum on the toothed sector (10), the pivot (18) to connect the rod (17) to said lever (1) and the pivot (9) to make the pawl (7) rest on a fulcrum on the same said lever (1), are inserted in holes made in a metal platelet (24) the shape of which is specular to that of the metal plate (21).

4. Device as claimed in claim 1 **characterised in that** the metal plate (21) is equipped with a reinforcement indentation (22).

## Patentansprüche

1. Sicherheitsvorrichtung für eine Feststellbremse eines Motorfahrzeugs, wobei die Bremse ausgestattet ist mit
- einem Plastikhebel (1), der auf einem Drehpunkt auf einem gezahnten Bereich (10) ruht und zwischen einer Ruhestellung und einer Wirkstellung beweglich ist;
- einem Mittel zum Regeln der Stellung des Hebels in Bezug auf den gezahnten Bereich, das aus einer Sperrklinke (7) in Form eines Ausgleichers besteht, die auf einem Drehpunkt auf dem Hebel (1) ruht;
- einem Drehzapfen (18) zur Verbindung mit dem Hebel, damit eine Stange (17) seine Bewegung zur Bremsvorrichtung des Motorfahrzeugs überträgt;
- ein Mittel zur Verbindung des gezahnten Bereichs mit der Fahrplattform des Motorfahrzeugs;
**dadurch gekennzeichnet,**
**dass** die Vorrichtung eine Metallplatte (21) umfasst, bei der der Drehzapfen (15) für das Ruhen des Hebels (1) auf einem Drehpunkt auf dem gezahnten Bereich (10), der Drehzapfen (9) für das Ruhen der Sperrklinke (7) auf einem Drehpunkt auf dem Hebel (1), und der Drehzapfen zum Verbinden der Stange (17) mit dem Hebel (1) in entsprechende Löcher eingesetzt sind.

2. Vorrichtung nach Anspruch 1,
**dadurch gekennzeichnet,**
**dass** der Drehzapfen (15) für das Ruhen des Hebels (1) auf einem Drehpunkt auf dem gezahnten Bereich (10) und der Drehzapfen (18) zum Verbinden der Stange (17) mit dem Hebel (1) in Löcher eingesetzt sind, die in einem einzelnen Metallplättchen (24) ausgeführt sind.

3. Vorrichtung nach Anspruch 1,
**dadurch gekennzeichnet,**
**dass** der Drehzapfen (15) für das Ruhen des Hebels (1) auf einem Drehpunkt auf dem gezahnten Bereich (10), der Drehzapfen (18) zum Verbinden der Stange (17) mit dem Hebel (1), und der Drehzapfen (9) für das Ruhen der Sperrklinke (7) auf einem Drehpunkt auf dem gleichen Hebel (1) in Löcher eingesetzt sind, die in einem Metallplättchen (24) ausgeführt sind, dessen Form spiegelbildlich zu jener der Metallplatte (21) ist.

4. Vorrichtung nach Anspruch 1,
**dadurch gekennzeichnet,**
**dass** die Metallplatte (21) mit einer Verstärkungsvertiefung (22) ausgestattet ist.

## Revendications

1. Dispositif de sécurité destiné à un frein à main d'un véhicule motorisé, ledit frein étant équipé des éléments suivants :
- un levier en plastique (1), reposant sur un point d'appui prévu sur un secteur denté (10), et pouvant se déplacer entre une position de repos et une position de fonctionnement ;
- des moyens permettant de commander la position du levier en relation avec ledit secteur denté, constitués d'un arrêtoir (7) présentant la forme d'un égaliseur, reposant sur un point d'appui prévu sur ledit levier (1) ;
- un pivot (18) permettant d'assurer la connexion avec ledit levier pour une tige (17) transmettant son mouvement au dispositif de freinage du véhicule motorisé ;
- des moyens permettant d'assurer la connexion du secteur denté avec le soubassement du véhicule motorisé ;
**caractérisé en ce qu'**il comprend une plaque métallique (21) dans laquelle sont insérés, dans des trous adéquats, les éléments suivants : le pivot (15) amenant le levier (1) à reposer sur un point d'appui prévu sur le secteur denté (10) ; le pivot (9) amenant l'arrêtoir (7) à reposer sur un point d'appui prévu sur le levier (1), et le pivot raccordant la tige (17) audit levier (1).

2. Dispositif selon la revendication 1, **caractérisé en ce que** le pivot (15) amenant le levier (1) à reposer sur un point d'appui prévu sur le secteur denté (10) et le pivot (18) servant à raccorder la tige (17) audit levier (1) sont insérés dans des trous ménagés dans une seule plaquette métallique (24).

3. Dispositif selon la revendication 1, **caractérisé en ce que** le pivot (15) amenant le levier (1) à reposer sur un point d'appui prévu sur le secteur denté (10), le pivot (18) permettant de raccorder la tige (17) audit levier (1), et le pivot (9) amenant l'arrêtoir (7) à reposer sur un point d'appui prévu sur le même dit levier (1), sont insérés dans des trous ménagés dans une plaquette métallique (24) dont la forme est spéculaire par rapport à celle de la plaque métallique (21) .

4. Dispositif selon la revendication 1, **caractérisé en ce que** la plaque métallique (21) est équipée d'une encoche de renforcement.
